Europäisches Patentamt

European Patent Office

Office européen des brevets

(19)

(11) **EP 0 490 217 B1**

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.6: **C08L 33/04**
// (C08L33/04, 27:18)

(21) Anmeldenummer: **91120705.8**

(22) Anmeldetag: **02.12.1991**

(54) **Formmassen mit verbessertem Brandverhalten**

Moulding compound with improved fire-resistance

Masse à mouler à comportement au feu amélioré

(84) Benannte Vertragsstaaten:
**DE FR GB IT**

(30) Priorität: **13.12.1990 DE 4039861**

(43) Veröffentlichungstag der Anmeldung:
**17.06.1992 Patentblatt 1992/25**

(73) Patentinhaber: **BAYER AG**
**D-51368 Leverkusen (DE)**

(72) Erfinder:
- **Piejko, Karl-Erwin, Dr.**
  **W-5060 Bergisch Gladbach 2 (DE)**
- **Braese, Hans-Eberhard, Dipl.-Ing.**
  **W-5000 Köln 71 (DE)**
- **Lindner, Christian, Dr.**
  **W-5000 Köln 80 (DE)**

(56) Entgegenhaltungen:
EP-A- 0 166 187          EP-A- 0 320 836
DE-A- 3 928 153          DE-A- 4 000 544
GB-A- 2 199 583

**Beschreibung**

Die Erfindung betrifft Formmassen aus Acrylatpolymeren und gegebenenfalls Pfropfkautschuken und/oder harzartigen Vinylpolymerisaten, enthaltend Tetrafluorethylenpolymerisate. Die erfindungsgemäßen Mischungen weisen ein verbessertes Brandverhalten auf.

Weiche Polymerisatmischungen aus Acrylatpolymeren und Pfropfkautschuken sind bekannt (z.B. DE-OS 3 312 542). Mischungen, die zusätzlich weitere Komponenten enthalten und sich zur Herstellung von flexiblen alterungsbeständigen Folien mit lederartigem Aussehen eignen und durch Kalandrieren und Tiefziehen verarbeitet werden können, sind in den Anmeldungen gemäß DE-OS 3 811 899 und DE-OS 3 743 489 beschrieben.

Diese Folien weisen ein hohes Eigenschaftsniveau auf und werden beispielsweise zur Innenverkleidung in Kraftfahrzeugen eingesetzt.

Aus Sicherheitsgründen ist es dabei wünschenswert, Folien mit einer möglichst schlechten Brennbarkeit einzusetzen,damit sich eine potentielle Brandzone nur möglichst langsam ausbreitet. D.h., bei gegebener Brennbarkeit soll eine möglichst niedrige Brandgeschwindigkeit (Brennrate) vorliegen. Zusätze für eine Verbesserung des Brandverhaltens dürfen jedoch keine Absenkung der mechanischen Eigenschaften oder Störungen der Oberflächen bewirken, die insbesondere bei Anwendungen als Lederersatzmaterialien von Bedeutung sind.

Zur Verbesserung des Brandverhaltens werden Thermoplasten allgemein übliche Flammschutzmittel oder Kombinationen davon wie halogenorganische Substanzen, Phosphate, Aluminium- und/oder Antimonoxide zugefügt. Es ist weiterhin bekannt, daß diese Substanzen besonders effektiv in Verbindung mit Tetrafluorethylenpolymerisaten wirken.

In der US-A-4 355 126 werden zum Beispiel flammfeste Polyphenylenether/Pfropfkautschuk(ABS)-Formmassen, enthaltend Flammschutzmittel und Polytetrafluorethylen beschrieben. Die EP-A 154 138 beschreibt ABS-Formmassen, enthaltend Tetrafluorethylenpolymerisate und übliche Flammschutzmittel, hergestellt nach einem speziellen Verfahren, um Störungen der Oberfläche und ein Absinken des mechanischen Niveaus zu vermeiden. Der Zusatz der Tetrafluorethylenpolymerisate verbessert dabei jeweils die flammschützende Wirkung der üblichen Flammschutzmittel. In der US-A-4 355 126 wird gezeigt, daß der Zusatz von Polytetrafluorethylen zu Polyphenylenether/ ABS-Formmassen alleine keine flammschützende Wirkung hat.

Gegensfand der Erfindung sind Formmassen bestehend aus Acrylatpolymeren, hergestellt aus wenigstens einem $C_1$-$C_8$-Acrylsäurealkylester und gegebenenfalls bis zu 50 Gew. % Monomeren, ausgewählt aus Vinylacetat, $C_1$-$C_4$-Alkylmethacrylat, Styrol oder Acrylonitril in Gegenwart non radikalisch vernetzenden Comonomeren, wobei das Acrylat-Polymer teilchenförmig ist, und gegebenenfalls Pfropfkautschuken und/ oder gegebenenfalls harzartigen Vinylpolymerisaten, enthaltend 0,05 bis 5 Gew.-%, bevorzugt 0,25 bis 3 Gew.-% Tetrafluorethylenpolymerisate.

Die erfindungsgemäßen Formmassen weisen eine verringerte Brennrate auf bei ansonsten unveränderten Oberflächen und mechanischen Eigenschaften.

Erfindungsgemäß geeignete Tetrafluorethylenpolymerisate besitzen Fluorgehalte von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Solche Polymerisate sind bekannt aus "Vinyl and Related Polymers", John Wiley & Sons, Inc., New York, 1952, Seite 484 bis 494; "Fluorpolymers", Wiley-Interscience, New York, 1972; "Encyclopedia of Polymer Science and Technology", Interscience Publishers, New York, Band 13, 1970, Seite 623 bis 654; "Modern Plastics Encyclopedia", 1970 bis 1971, Band 47, Nr. 10 A, Oktober 1970 McGraw-Hill, Inc., New York, Seite 134, 138 und 774; "Modern Plastics Encyclopedia", 1975 bis 1976, Oktober 1975, Band 52, Nr. 10 A, McGraw-Hill, Inc., New York, Seite 27, 28 und 472 und US-PS 3 671 487, 3 723 373 und 3 838 092.

Die erfindungsgemäßen Acrylatpolymere sind Homo-oder Interpolymere aus wenigstens einem $C_1$-$C_8$-Acryl-säurealkylester (z.B. Methyl-, Ethyl-, Propyl-, Butyl-, Pentyl-, Hexyl-, 2-Ethylhexylacrylat bzw. Acrylsäurealkylester mit den entsprechenden isomeren $C_3$-$C_8$-Alkyl-resten), die bis zu 50 Gew.-% Comonomere einpolymerisiert enthalten können; Comonomere sind Vinylacetat, $C_1$-$C_4$-Alkyl methacrylate, insbesondere Methylmethacrylat Styrol oder Acrylnitril.

Die Acrylatpolymere in wenigstens teilvernetzter Form werden in Anwesenheit radikalisch vernetzender Comonomere hergestellt, insbesondere polyfunktioneller Allyl- oder Vinylverbindungen. Die Herstellung der Acrylatpolymere erfolgt vorzugsweise durch Emulsionspolymerisation.

Acrylatpolymere im Sinne der Erfindung sind teilchenförmige, wenigstens teilvernetzte Polymere.

Besonders geeignete Acrylatpolymere, Pfropfkautschuke und harzartige Vinylpolymerisate sind in den DE-OS 3 312 542, 3 811 899 und 3 743 489 beschrieben. Als weitere Bestandteile können in den erfindungsgemäßen Formmassen die in der DE-OS 3 841 669 beschriebenen Polymerisate aus cyclischen aliphatischen Estern und Carbonaten und/oder die in der DE-OS 3 918 405 beschriebenen Carbonatgruppen enthaltenden Polyester enthalten sein. Formmassen im Sinne der Erfindung, die als Pfropfkautschuke ausschließlich solche auf Acrylatbasis enthalten, sind bevorzugt. Weiterhin sind Formmassen bevorzugt, die harzartige Vinylpolymerisate enthalten.

Insbesondere sind solche Formmassen bevorzugt, die als Pfropfkautschuke ausschließlich solche auf Acrylatbasis und harzartige Vinylpolymerisate enthalten.

Bevorzugte Formmassen sind dadurch gekennzeichnet, daß man zu ihrer Herstellung eine wäßrige Dispersion des oder der Tetrafluorethylenpolymerisate mit Teilen eines oder mehrerer der Latices der Acrylatpolymere, Pfropfkautschuke oder harzartigen Vinylpolymerisate vermischt, das Polymergemisch isoliert und gegebenenfalls mit den jeweils restlichen separat isolierten Komponenten in üblicher Weise, gegebenenfalls unter Zusatz üblicher Hilfsmittel wie beispielsweise Gleitmittel, Oxidationsschutzmittel, Antistatika und Farbmittel, vermischt. Die Mischungen können in üblichen Mischern wie Knetern, Extrudern, Walzen oder Schnecken mit den Komponenten vermischt werden.

Die Isolierung des Polymergemisches aus dem Latexgemisch erfolgt z.B. durch Koagulation, Filtration und anschließende Trocknung oder durch direkte Sprühtrocknung oder andere Verfahren gemäß dem Stand der Technik.

Die erfindungsgemäßen Formmassen können weiterhin übliche Flammschutzmittel wie beispielsweise halogenorganische Substanzen, Phosphate, Aluminium- oder Antimonoxide oder Mischungen dieser Verbindungen in den üblichen Konzentrationen enthalten.

Beispiele

I Herstellung von Polytetrafluorethylen/Pfropfkau tschukmischungen:

IA Ein Latex eines Polytetrafluorethylens (Hostaflon TF 5032® der Fa. Hoechst AG) mit einem Fluorgehalt (bezogen auf Feststoff) von 70,5 Gew.-% wird mit einem Latex eines Acrylatpfropfkautschuks <Bestandteil a1 der DE-OS 3 811 899) im Verhältnis 10:90 (bezogen auf Feststoff) vermischt und durch Koagulation mit einer wäßrigen Magnesiumsulfatlösung zu einem Pulver aufgearbeitet.

1. Acrylatkautschuklatex 1 als Pfropfgrundlage

17.232 Gew.-Teile Wasser und 588 Gew.-Teile eines Polybutadienkautschuklatex mit einem Polymerfeststoffgehalt von 42 Gew.-% und einem mittleren Teilchendurchmesser ($d_{50}$) von 140 nm. Nach Aufheizen auf 63°C gibt man eine Lösung aus 49,2 Gew.-Teilen Kaliumperoxodisulfat und 1.152 Gew.-Teilen Wasser hinzu. Danach werden folgende Mischungen gleichzeitig innerhalb von 5 Stunden bei 63°C in den Reaktor eingespeist:

Lösung 1:

36.000 Gew.-Teile n-Butylacrylat
81,6 Gew.-Teile Triallylcyanurat

Lösung 2:

40.800 Gew.-Teile Wasser
384 Gew.-Teile $C_{14}$-$C_{18}$-Alkylsulfonsäuren-Na-Salz

Danach läßt man 4 Stunden bei 63°C auspolymerisieren. Es wird eine Emulsion mit einem Polymerfeststoffgehalt von 37 Gew.-% erhalten. Der mittlere Latexteilchendurchmesser ($d_{50}$) beträgt 480 nm. Das Polymerisat besitzt einen Gel-Gehalt von 93 Gew.-%.

IB Ein Latex eines Polytetrafluorethylens (Hostaflon TF 5032® der Fa. Hoechst AG) mit einem Fluorgehalt (bezogen auf Feststoff) von 70,5 Gew.-% wird mit einem Latex eines Butadienpfropfkautschuks, hergestellt durch Polymerisation von 70 Gew.-% einer Mischung aus 72 Gew.-% Styrol und 28 Gew.-% Acrylnitril auf 30 Gew.-% eines vernetzten Polybutadienlatex des mittleren Teilchendurchmessers von 380 nm, im Verhältnis 10:90 (bezogen auf Feststoff) vermischt und durch Koagulation mit einer wäßrigen Magnesiumsulfatlösung zu einem Pulver aufgearbeitet.

II Herstellung der erfindungsgemäßen Formmassen

IIA Eine Formmasse wird gemäß den Angaben in DE-OS 3 811 899 aus 45 Gew.-% eines dort beschriebenen Acrylatpfropfkautschuks (Bestandteil a1 der DE-OS 3 811 899), 40 Gew.-% eines vernetzten Butylacrylat/Acrylnitrilcopolymeren (Bestandteil b der DE-OS 3 811 899) und 15 Gew.-% eines Styrol/Acrylnitril-harzes (Bestandteil c der DE-OS 3 811 899) hergestellt.

Bestandteil a1 der DE-OS 3 811 899:

In einem Reaktor werden 734 G.w.-Teile Wasser, 4.784 Gew.-Teile Acrylatkautschuklatex 1 vorgelegt. Es wird 30 Minuten mit Stickstoff gespült und auf 70°C erhitzt. Unter Rühren wird die folgende Lösung 1 zugegeben:

Lösung 1:

190   Gew.-Teile Wasser

6     Gew.-Teile Kaliumperoxodisulfat

3     Gew.-Teile $C_{14}$-$C_{18}$-Alkylsulfonsäuren-Na-Salz.

Danach werden die Lösungen 2 und 3 gleichzeitig innerhalb 5 Stunden in den Reaktor bei 70°C eingespeist.

Lösung 2:

850     Gew.-Teile Styrol

330     Gew.-Teile Acrylnitril.

Lösung 3:

1.500   Gew.-Teile Wasser

20      Gew.-Teile $C_{14}$-$C_{18}$-Alkylsulfonsäuren-Na-Salz.

Man läßt 4 Stunden bei 70°C auspolymerisieren. Es wird eine Emulsion mit einem Polymerfeststoffgehalt von 35 Gew.-% erhalten. Der Kautschukgehalt des Polymerisate 6 beträgt 60 Gew.-%.

Bestandteil b der DE-OS 3 811 899:

In einem Reaktor werden unter Rühren eine Lösung von 2,5 Gew.-Teilen Na-Salz von $C_{14}$-$C_{18}$-Alkylsulfonsäuren und 750 Gew.-Teilen Wasser vorgelegt. Nach Aufheizen auf 70°C gibt man 79 Gew.-Teile der Monomerlösung A) hinzu und initiiert die Polymerisation durch Zugabe einer Lösung von 3,5 Gew.-Teilen Kalumperoxodisulfat in 50 Gew.-Teilen Wasser. Bei 70°C dosiert man den Rest der Lösung A) sowie die Lösung B) gleichmäßig innerhalb von 6 Stunden in den Reaktor ein und polymerisiert innerhalb von 4 Stunden aus. Es wird ein Latex mit einem Polymerfeststoffstoffgehalt von 38 Gew.-%, mit einem mittleren Teilchendurchmesser ($d_{50}$) von 180 nm und einem Gelgehalt (in Dimethylformamid bei 23°C) von 98 Gew.-% erhalten.

Lösung A:

1.105   Gew.-Teile n-Butylacrylat

7       Gew.-Teile Triallylcyanurat

474     Gew.-Teile Acrylnitril

Lösung B:

30      Gew.-Teile Na-Salz von $C_{14}$-$C_{18}$-Alkylsulfonsäuren

1.790   Gew.-Teile Wasser.

Bestandteil C der DE-OS 3 811 899

In einem Reaktor werden eine Lösung von 6 Gew.-Teilen disproportionierte Abietinsäure, 4 Gew.-Teile 1-normale Natronlauge in 3.080 Gew.-Teilen Wasser vorgelegt, mit Stickstoff gespült und auf 70°C geheizt. Unter Rühren setzt man 200 Gew.-Teile der Lösung A zu und initiiert die Polymerisation durch Zugabe einer Lösung aus 8 Gew.-Teilen Kaliumperoxodisulfat in 200 Gew.-Teilen Wasser. Bei 70° dosiert man den Rest der Lösung A und Lösung B gleichmäßig innerhalb 5 Stunden in den Reaktor ein. Man läßt 4 Stunden bei 70°C auspolymerisieren. Es wird eine Emulsion mit einem Polymerfeststoffgehalt von 33 Gew.-% erhalten. Das isolierte Polymerisat besitzt einen Staudinger-Index ($\eta$) von 0,7 dl/g (in Dimethylformamid bei 23°C).

Lösung A:

1.944   Gew.-Teile Styrol

756     Gew.-Teile Acrylnitril

2,6     Gew.-Teile tert.-Dodecylmercaptan

Lösung B:

54      Gew.-Teile disproportionierte Abietinsäure
40      Gew.-Teile 1-normale Natronlauge
2.050   Gew.-Teile Wasser.

IIB Eine Formmasse aus 56 Gew.-% eines ABS-Pfropfpolymerisats, hergestellt durch Polymerisation von 70 Gew.-% einer Mischung aus 72 Gew.-% Styrol und 28 Gew.-% Acrylnitril auf 30 Gew.-% eines vernetzten Polybutadienlatex der mittleren Teilchengröße von 380 nm und 44 Gew.-% des vernetzten Butylacry-lat/Acrylnitrilcopolymeren aus IIA wird analog IIA hergestellt.

Beispiele 1 bis 3 und Vergleichsbeispiel 4

Der Formmasse IIA werden auf einer Walze solche Gewichtsanteile der Mischung IA zugesetzt, daß die in der Tabelle aufgeführten Anteile an Polytetrafluorethylen enthalten sind. Weiterhin werden pro 100 Gew.-Teilen der so erhaltenen Mischung 0,3 Gew.-Teile Loxiol G70® (hochmolekularer, mehrfunktioneller Fettsäureester der Fa. Henkel), sowie 5 Gew.-Teile eines Polycaprolactons (mit einem $\overline{M}_w$ von 40.000) zugemischt.
Die Anteile an Polytetrafluorethylen in den Formmassen und die Prüfergebnisse sind in der folgenden Tabelle zusammengefaßt.

Tabelle

| Zusammensetzung der Formmassen IIA und Prüfergebnisse | | | | | |
|---|---|---|---|---|---|
| Beispiel Nr. | Anteil Polytetrafluorethlen [Gew.-%] | Brennrate US FMVSS Nr.302 [mm/min] | Zugfestigkeit DIN 53455 [MPa] | Dehnung DIN 53455 [%] | Shorehärte DIN 53505 A/D |
| 1 | 0,5 | 32 | 18,2 | 242 | 94/38 |
| 2 | 1,0 | 27 | 18,3 | 244 | 94/39 |
| 3 | 1,5 | 27 | 18,2 | 237 | 95/39 |
| 4 Vergleich | - | 64 | 18,1 | 242 | 95/40 |

Beispiel 5 und Vergleichsbeispiel 6

Der Formmasse IIB werden auf einer Walze 10 Gew.-Teile der Mischung IB (Beispiel 5) bzw. 10 Gew.-Teile des entsprechenden ABS-Pfropfpolymerisats ohne Polytetrafluorethylen (Vergleichsbeispiel 6) zugesetzt. Weiterhin werden pro 100 Gew.-Teile der so erhaltenen Mischung 0,3 Gew.-Teile Loxiol G70® (hochmolekularer, mehrfunktioneller Fettsäureester der Fa. Henkel) zugemischt.

| Beispiel- Nr. | Anteil Polytetrafluorethylen [Gew.-%] | Brennrate US FMVSS No. 302 [mm/min] |
|---|---|---|
| 5 | 1,0 | 35 |
| 6 (Vergleich) | - | 61 |

Die erfindungsgemäßen Formmassen 1 bis 3 und 5 weisen gegenüber den Vergleichsformmassen ohne Polytetrafluorethylen (Vergleichbeispiele 4 und 6) eine deutlich verringerte Brennrate bei ansonsten unveränderten mechanischen Eigenschaften auf. Die Oberflächen der Prüfkörper sind jeweils ungestört.

**Patentansprüche**

1.  Thermoplastische Formmassen, bestehend aus

A) Acrylat-Polymer, hergestellt aus wenigstens einem $C_1$-$C_8$-Acrylsäurealkylester und gegebenenfalls bis zu 50 Gew.-% Monomeren, ausgewählt aus Vinylacetat, $C_1$-$C_4$-Alkylmethacrylat, Styrol oder Acrylnitril in Gegenwart von radikalisch vernetzenden Comonomeren, wobei das Acrylat-Polymer teilchenförmig ist,

B) 0,05 bis 5 Gew.-% (bezogen auf 100 Gew.-% A)) Tetrafluorethylenpolymer,
und gegebenenfalls
Pfropfkautschuken und/oder harzartigen Vinylpolymerisaten.

2. Formmassen nach Anspruch 1, dadurch gekennzeichnet, daß 0,25 bis 3 Gew.-% Tetrafluorethylenpolymerisate enthalten sind.

3. Formmassen nach Anspruch 1, dadurch gekennzeichnet, daß die Tetrafluorethylenpolymerisate Fluorgehalte von 65 bis 76 Gew.-% aufweisen.

4. Formmassen nach Anspruch 1, dadurch gekennzeichnet, daß man zu ihrer Herstellung eine wäßrige Dispersion des oder der Tetrafluorethylenpolymerisate mit Teilen eines oder mehrerer der Latices der Acrylatpolymere, Pfropfkautschuke oder harzartigen Vinylpolymerisate vermischt, das Polymergemisch isoliert und gegebenenfalls mit den jeweils restlichen separat isolierten Komponenten in üblicher Weise unter Zusatz von Hilfsmitteln vermischt.

## Claims

1. Thermoplastic moulding compositions consisting of

   A) acrylate polymer produced from at least one $C_{1-8}$ alkyl acrylate and optionally up to 50% by weight of monomers selected from vinyl acetate, $C_{1-4}$ alkyl methacrylate, styrene or acrylonitrile in the presence of radically crosslinking comonomers, the acrylate polymer being particulate,

   B) 0.05 to 5% by weight (based on 100% by weight of A)) of tetrafluoroethylene polymer
   and optionally
   graft rubbers and/or resin-like vinyl polymers.

2. Moulding compositions as claimed in claim 1, characterized in that they contain 0.25 to 3% by weight of tetrafluoroethylene polymers.

3. Moulding compositions as claimed in claim 1, characterized in that the tetrafluoroethylene polymers have fluorine contents of 65 to 76% by weight.

4. Moulding compositions as claimed in claim 1, characterized in that, for their production, an aqueous dispersion of the tetrafluoroethylene polymer(s) is mixed with parts of one or more of the latices of the acrylate polymers, graft rubbers or resin-like vinyl polymers, the polymer mixture is isolated and optionally mixed with the remaining separately isolated components in the usual way in the presence of auxiliaries.

## Revendications

1. Matières à mouler thermoplastiques consistant en

   A) un polymère d'acrylate préparé à partir d'au moins un acrylate d'alkyle en $C_1$ à $C_8$ et le cas échéant d'une proportion allant jusqu'à 50 % en poids de monomères choisis dans le groupe formé par l'acétate de vinyle, les méthacrylates d'alkyle en $C_1$ à $C_4$, le styrène ou l'acrylonitrile, en présence de comonomères aptes à la réticulation radicalaire, le polymère d'acrylate étant à l'état de particules,
   B) 0,05 à 5 % en poids (pour 100 % en poids de A)) d'un polymère du tétrafluoréthylène,
   et le cas échéant
   des caoutchoucs greffés et/ou des polymères vinyliques résineux.

2. Matières à mouler selon revendication 1, caractérisées en ce qu'elles contiennent de 0,25 à 3 % en poids de polymères du tétrafluoréthylène.

3. Matières à mouler selon revendication 1, caractérisées en ce que les polymères du tétrafluoréthylène ont des teneurs en fluor de 65 à 76 % en poids.

4. Matières à mouler selon revendication 1, caractérisées en ce que, pour leur préparation, on mélange une dispersion aqueuse du ou des polymères du tétrafluoréthylène avec une partie d'un ou plusieurs des latex des polymères d'acrylates, des caoutchoucs greffés ou des polymères vinyliques résineux, on isole le mélange des polymères et, le cas échéant, on ajoute et on mélange le reste des composants, séparément, de la manière habituelle, avec adjonction de produits auxiliaires.